# EUROPEAN PATENT APPLICATION

(11) **EP 4 297 128 A1**
(43) Date of publication of application: **27.12.2023**
(21) Application number: 22806514.0
(22) Date of filing: 27.04.2022
(51) Int. Cl.: H01M 4/58, H01M 10/0525, C01B 25/45, B82Y 30/00

(54) **LITHIUM IRON PHOSPHATE, PREPARATION METHOD THEREFOR, AND APPLICATION THEREOF**

(30) Priority: 14.05.2021 CN 202110526297
(71) Applicant: Hefei Gotion High-Tech Power Energy Co., Ltd., Hefei, Anhui 230012 (CN)
(72) Inventor: WANG, Weiwei, Hefei, Anhui 230012 (CN); YANG, Maoping, Hefei, Anhui 230012 (CN); LIU, Xingliang, Hefei, Anhui 230012 (CN); ZHANG, Erdong, Hefei, Anhui 230012 (CN)
(74) Representative: Novagraaf Technologies
(86) International application number: PCT/CN2022/089583
(87) International publication number: WO 2022/237545

(57) **Abstract**

The present disclosure provides a lithium iron phosphate, a preparation method thereof, and an application thereof. The preparation method includes: dispersing a lithium source by using an emulsifier, then adding a first initiator, and carrying out a first polymerization reaction to obtain an intermediate product A; adding a mixed solution of methyl methacrylate, a crosslinking agent and a second initiator to the intermediate product A, and carrying out a second polymerization reaction to obtain an intermediate product B; mixing the intermediate product B, an oxidant, an iron source and a phosphorus source, and carrying out a third reaction to obtain an intermediate product C; and dispersing the intermediate product C by using a glucose solution, and carrying out drying and calcining to obtain the lithium iron phosphate. The present disclosure also provides the lithium iron phosphate obtained by the preparation method. The present disclosure further provides a positive electrode material, including the lithium iron phosphate. According to the preparation method, a nano-scale lithium iron phosphate can be directly obtained, and procedures, such as pulverization, and energy consumption in the manufacturing process can be reduced. The lithium iron phosphate has evenly distributed elements, and has good charge and discharge properties when being used as a positive electrode material.

## Description

### Cross-Reference to Related Application

This application is based on and claims the priority of Chinese Application No. 202110526297.5, filed on May 14, 2021, which is incorporated herein again by reference in its entirety.

### Technical Field

The present disclosure relates to the technical field of manufacturing of battery positive electrode materials, and in particular to a lithium iron phosphate, a preparation method thereof, and an application thereof.

### Background

With the attention of human society to energy and environmental protection, lithium-ion batteries have developed rapidly in recent years and have been widely used in the fields of mobile phones, computers, new energy vehicles and energy storage. Especially, with the explosive growth of the new energy vehicle market, lithium batteries are booming, competition in the industry is becoming fiercer and fiercer, and indigenous battery giants have gradually emerged. Since new energy vehicles in the downstream industry have entered a growth stage from an introduction stage, factors such as subsidy phase-down and increased technical performance requirements intensify the survival of the fittest in the battery industry, and the market concentration is increased. In such a fierce competitive environment, it is extremely important to improve the cost performance of materials.

LiFePO₄ has the characteristics of extensive raw material sources, low price, good thermal stability, excellent cycle performance, outstanding safety performance and zero environmental pollution, making it an ideal electrode material in the field of electric vehicles.

At present, in a conventional preparation process of a lithium iron phosphate positive electrode material, high energy consumption is caused by stirring and ball milling. Moreover, raw materials may be unevenly mixed in a process of synthesizing lithium iron phosphate by a conventional solid-phase method, which leads to impure sintered components of the material and loss of material performance. Therefore, it is particularly important to continuously optimize the synthesis process and improve the cost performance of the lithium iron phosphate material.

### SUMMARY

In order to solve the above problem, an objective of the present disclosure is to provide a lithium iron phosphate, a preparation method thereof, and an application thereof, according to the preparation method, a nano-scale lithium iron phosphate can be directly obtained, and the pulverization procedure and energy consumption in the manufacturing process can be reduced. The lithium iron phosphate has evenly distributed elements, and has the advantages of simple synthesis process, low cost, excellent capacity per gram and excellent rate capability when being used as a positive electrode material.

In order to achieve the above objective, the present disclosure provide a preparation method for a lithium iron phosphate, the preparation method includes:

S1: dispersing a lithium source by using an emulsifier, adding a first initiator, and carrying out a first polymerization reaction to obtain an intermediate product A;

S2: adding a mixed solution of methyl methacrylate, a crosslinking agent and a second initiator to the intermediate product A, and carrying out a second polymerization reaction to obtain an intermediate product B;

S3: mixing the intermediate product B, an oxidant, an iron source and a phosphorus source, and carrying out a third reaction to obtain an intermediate product C; wherein a pH of the reaction system of the third reaction is kept at 2.1 to 2.3 by adding ammonia water; and an addition speed of the ammonia water is V=10t²+5, wherein V is the addition speed of the ammonia water in mL/min, and t is the cumulative addition time of the ammonia water in min;

S4: dispersing the intermediate product C by using a glucose solution, drying and calcining to obtain the lithium iron phosphate.

In the preparation method, the intermediate product B is core-shell lithium source nanoparticles coated by a macromolecule. The macromolecule serving as the coating of the lithium source nanoparticles can effectively prevent lithium source particles from being dissolved in an acidic environment during subsequent synthesis of iron phosphate particles. The macromolecule-coated lithium source nanoparticles can increase the number of nucleation sites of the iron phosphate, so as to generate more and smaller iron phosphate particles under the condition that concentrations of the iron source and the phosphorus source remains unchanged, these iron phosphate particles are attached to the surface of the macromolecule-coated lithium source particles, after the macromolecule is removed by calcining, the iron phosphate and lithium source particles are fused and sintered into the lithium iron phosphate material with evenly mixed lithium, phosphorus and iron. The nano-scale material can be obtained without pulverization, which helps in improving the capacity per gram of the lithium iron phosphate material.

In a conventional synthesis process for lithium iron phosphate, iron phosphate is typically synthesized first, and then the lithium iron phosphate is synthesized, procedures for synthesizing iron phosphate typically include solid-phase synthesis, drying, sintering and pulverization; procedures for synthesizing lithium iron phosphate typically include mixing (including the iron phosphate material), sand grinding, drying, etc. According to the present disclosure, by synthesizing the lithium iron phosphate in a liquid phase, the procedures such as grinding and pulverization in the conventional process are avoided, so that the synthesis process is simplified into synthesis and drying, thus, the present disclosure has the technical effects of fewer procedures, lower energy consumption and low cost.

In the above preparation method, in the S1, the lithium source typically includes one or a combination of two or more of lithium carbonate, lithium hydroxide, lithium chloride, lithium fluoride, lithium acetate and lithium nitrate. The lithium source is typically nanoparticles whose particle size D50 is typically controlled at 300 nm to 400 nm.

In the above preparation method, in the S1, the emulsifier may include an anionic surfactant and/or a nonionic surfactant, the anionic surfactant may include sodium lauryl sulfate; the nonionic surfactant may include polyoxyethylene alkyl phenol ether. In some specific implementations, a mass ratio of the anionic surfactant to the nonionic surfactant is preferably (1-1.5): 1, for example, 1.5:1, 1:1 or 1.25:1, that is, the emulsifier may include the sodium lauryl sulfate and the polyoxyethylene alkyl phenol ether in a mass ratio of (1-1.5):1.

In the above preparation method, in the S1, a mole ratio of the emulsifier to the lithium source is typically controlled at (0.5-1):1.

In the above preparation method, in the S1, the first polymerization reaction is a free radical initiated polymerization reaction, which is typically carried out at a temperature of 60 to 70°C for 2 to 4 h.

In the above preparation method, in the S1, the first initiator used in the first polymerization reaction may include butyl acrylate and/or divinylbenzene, for example, divinylbenzene and butyl acrylate in a mole ratio of (5-10):(90-95) (preferably 5:95).

In the above preparation method, in the S1, a mole ratio of the first initiator to the lithium source is typically controlled at (0.5-1):1, for example, 0.5:1,0.6:1,0.7:1,0.8:1 or 1:1.

In the above preparation method, in the S2, a mole ratio of the methyl methacrylate to the lithium source is typically controlled at (0.05-0.5):1, for example, 0.05:1.

In the above preparation method, in the S2, a mole ratio of the methyl methacrylate to the crosslinking agent to the second initiator is typically (1-2):0.5:(1-3), for example, 1:0.5:1, 1.1:0.5:1, 2:0.5:1.5, 1.5:0.5:3, 2:0.5:1 or 2:0.5:3.

In the above preparation method, in the S2, the crosslinking agent typically includes divinylbenzene.

In the above preparation method, in the S2, the second initiator typically includes one or a combination of two or more of ammonium persulfate, potassium persulfate and hydrogen peroxide.

In some specific implementations, in the S2, the methyl methacrylate, the crosslinking agent and the second initiator are typically added in the form of a mixed solution to the intermediate product A, in the mixed solution, a molar concentration of the crosslinking agent maybe 0.5%, a molar concentration of the second initiator may be 1-3%, and a molar concentration of the methyl methacrylate may be 1-2%.

In the above preparation method, in the S2, the second polymerization reaction is typically carried out at a temperature of 75-85 °C for 4 h.

In a specific implementation of the present disclosure, in the S2, the product of the second polymerization reaction is typically an emulsion, which typically needs to be cooled to room temperature (25°C), demulsified, washed with water and dried to obtain the intermediate product B. The demulsification may use ethanol, an aqueous solution of sodium chloride or an aqueous solution of potassium chloride. If the ethanol is used, the demulsified product may be directly dried; if the aqueous solution of sodium chloride or the aqueous solution of potassium chloride is used, before the drying is carried out, it is required to wash the product with water until no Cl⁻ can be detected in the product by using an AgNOs solution. The drying is typically spray-drying, the drying is typically carried out at 70-80 °C.

In a specific implementation of the present disclosure, in the S2, the intermediate product B is specifically macromolecule-coated lithium carbonate nanoparticles which have a core-shell structure. The lithium carbonate nanoparticle, serving as a core, is the nucleation site during subsequent synthesis of iron phosphate. The macromolecule, serving as a protective shell, can effectively prevent the lithium carbonate core from being dissolved in an acidic solution and ensure nucleation of the iron phosphate normally on the surface of lithium carbonate.

In a specific implementation of the present disclosure, in the S3, during the third reaction of the intermediate product B with the iron source and the phosphorus source, a nano-scale lithium iron phosphate precursor can be generated. During the third reaction, a large number of iron phosphate nucleates with the macromolecule-coated lithium carbonate as the nucleation site to form fine iron phosphate particles that are attached to the surface of the core-shell lithium carbonate nanoparticles.

In the above preparation method, in the S3, the third reaction may be carried out at a temperature of 70-80 °C for 4 h to 8 h.

In some specific implementations, in the S3, typically, the iron source and the oxidant are sequentially added to the intermediate product B and quickly stirred to obtain a suspension, and the phosphorus source is added to the suspension and evenly stirred to obtain the intermediate product C. Specifically, during the addition of the phosphorus source, the pH of the reaction system is typically kept at 2.1 to 2.3, then during the addition of the phosphorus source, ammonia water (typically having a mass concentration of ≥6.5%) may be added (typically added slowly). The dropwise addition of the ammonia water can adjust the pH, so as to ensure an even reaction rate and prevent the iron phosphate from growing too fast. An addition speed of the ammonia water is preferably V=10t²+5, The V is the addition speed of the ammonia water in mL/min, and t is the cumulative addition time of the ammonia water in min. The speed of the ammonia water involved in the reaction is controlled, that is, at the beginning of the reaction, the dropwise addition speed should be low since the concentration of the reactants is high, and in the later period, the dropwise addition speed should be high since the concentration of the reactants is low, this can ensure a stable reaction rate and even particle size distribution of the synthesized material.

In the above preparation method, in the S3, the iron source is typically ferric iron salt, including, for example, one or a combination of two or more of ferric chlorate, ferric sulfate, ferric nitrate, etc.

In the above preparation method, in the S3, a mole ratio of iron in the iron source to lithium in the lithium source is typically controlled at 1:(0.95-1.25), for example, 1:1.25, 1:0.95 or 1:1.

In the above preparation method, in the S3, a mole ratio of the iron in the iron source to the oxidant is typically controlled at 1:(0.2-0.5), for example, 1:0.5, 1:0.2 or 1:0.35.

In the above preparation method, in the S3, the oxidant is typically hydrogen peroxide, and the hydrogen peroxide may be a hydrogen peroxide solution with a mass concentration of ≥20%.

In the above preparation method, in the S3, the phosphorus source is typically one or a combination of two or more of phosphoric acid (typically with a solution concentration of ≥75%), ammonium dihydrogen phosphate, ammonium phosphate, etc.

In the above preparation method, in the S3, a mole ratio of phosphorus in the phosphorus source to the iron in the iron source is typically controlled at 1:(0.95-1), for example, 1:(0.95-0.98).

In some specific implementations, in the S4, the system obtained after the reaction of the intermediate product B, the iron source, the phosphorus source and the oxidant is typically in the form of a suspension, which typically needs filtration and washing with water before being dispersed with the glucose solution. The product needs to be washed with water until no Cl⁻ can be detected in the product by using an AgNOs solution and no SO₄²⁻ can be detected by using Ba(NO₃)₂.

In the above preparation method, in the S4, glucose in the glucose solution typically accounts for 40% to 50%, for example, 40%, 45% or 50%, by mass of the lithium carbonate.

In a specific implementation of the present disclosure, in the S4, the calcining process can remove the macromolecule layer between the lithium carbonate and the iron phosphate, so that the lithium, the iron and the phosphorus can sufficiently contact each other to form the lithium iron phosphate with evenly distributed elements. The calcining is carried out at a temperature of 700 °C-800 °C for 6 h-10 h.

In the above preparation method, in the S4, the calcining process is typically carried out in a protective gas such as nitrogen, neon or argon, typically in high-purity nitrogen, high-purity neon or high-purity argon.

In specific implementations of the present disclosure, the preparation method may include:
1. A lithium source (one or a combination of two or more of lithium carbonate, lithium hydroxide, lithium chloride, lithium fluoride, lithium acetate and lithium nitrate) is mixed with an emulsifier (sodium lauryl sulfate, polyoxyethylene alkyl phenol ether, etc.) to obtain an emulsion of the lithium source, a first initiator (butyl acrylate, divinylbenzene, etc.) is added to the emulsion of the lithium source, and a first polymerization reaction is carried out at 60-70 °C for 2 h to 4 h to obtain an intermediate product A, a mole ratio of the lithium source to the emulsifier to the first initiator is (0.5-1):(0.5-1):1.
2. A mixed solution of methyl methacrylate, a crosslinking agent (e.g., divinylbenzene) and a second initiator (ammonium persulfate, potassium persulfate, hydrogen peroxide, etc.) is prepared, a mole ratio of the methyl methacrylate to the crosslinking agent to the second initiator is typically (1-2):0.5:(1-3), and a mole ratio of the methyl methacrylate to the lithium source is typically (0.05-0.5):1. The mixed solution is added to the intermediate product A, and a second polymerization reaction is carried out at 75-85 °C for 4 h-8 h. The emulsion obtained after the reaction is cooled, demulsified and vacuum-dried at 70-80 °C to obtain macromolecule-coated lithium source nanoparticles, i.e., an intermediate product B.
3. The intermediate product B, an oxidant (hydrogen peroxide, etc.) and an iron source (ferric iron salt, such as ferric chloride, ferric sulfate, ferric nitrate, etc.) are mixed and quickly stirred to obtain a first suspension, a mole ratio of lithium in the lithium source, the oxidant, iron in the iron source is (0.95-1.25):(0.2-0.5):1.
4. A phosphorus source (phosphoric acid, ammonium dihydrogen phosphate, ammonium phosphate, etc.) is added to the first suspension and evenly stirred, ammonia water is added to adjust a pH of the solution to 2.1 to 2.3, a reaction is carried out at 70-80 °C for 4 h to 8 h to obtain asecond suspension, the second suspension is filtered, and the solid is washed until there is no residue of CI- or SO₄²⁻, thereby obtaining an intermediate product C. A mole ratio of phosphorus in the phosphorus source to the iron in the iron source is 1:(0.95-1), and a dropwise addition speed of the ammonia water is preferably V=(10t²+5) mL/min to ensure an even reaction rate.
5. The intermediate product C is dispersed in a glucose solution, and spray drying is carried out at 70-80 °C to obtain a nano-scale lithium iron phosphate precursor, the nano-scale lithium iron phosphate precursor is calcined at 700-800 °C in an inert atmosphere of high-purity nitrogen, high-purity argon or high-purity neon for 6 h to 10 h to remove the macromolecule coated on the lithium source particles, so that the lithium, the phosphorus and the iron sufficiently contact each other, thereby obtaining the lithium iron phosphate material with evenly distributed elements.

The present disclosure also provides a lithium iron phosphate, obtained by the preparation method described above.

The present disclosure further provides a positive electrode material, including the lithium iron phosphate. The lithium iron phosphate has the advantages of simple synthesis process, low cost, excellent capacity per gram and excellent rate capability when being used as a positive electrode material.

The present disclosure has the following beneficial effects:
1. In the preparation method for the lithium iron phosphate provided by the present disclosure, the emulsifier can ensure the lithium source nanoparticles to be effectively coated by the macromolecule, so that the core-shell macromolecule-coated lithium source nanoparticles can be formed, which prevents the lithium source particles from being dissolved in an acidic environment during synthesis of iron phosphate. The macromolecule-coated lithium source nanoparticles can provide more nucleation sites for the synthesis of iron phosphate, so that the iron phosphate can grow on the surface of the core-shell lithium carbonate nanoparticles, which increases the nucleation number of the iron phosphate. Thus, a core-shell lithium carbonate nano composite coated by a plurality of iron phosphate nanoparticles is formed. Then, the macromolecule shell is removed by the calcining process, so that the lithium, the iron and the phosphorus are thoroughly mixed and sintered, which improves the capacity per gram of the material. The above process is carried out in a liquid phase, so that the elements can be thoroughly mixed and further distributed evenly in the final product.
2. In the preparation method for the lithium iron phosphate provided by the present disclosure, when the phosphorus source is added the mixed solution of the intermediate product B, the oxidant and the iron source, the ammonia water is added dropwise to control the reaction system to be acidic. The dropwise addition speed of the ammonia water is controlled, that is, at the beginning of the third reaction, the dropwise addition speed of the ammonia water should be low since the concentration of the reactants is low (the amount of the phosphorus source added is small), and in the later period, the dropwise addition speed of the ammonia water should be high since the concentration of the reactants is high. This can ensure a stable reaction rate and even particle size distribution of the synthesized material.
3. According to the preparation method for the lithium iron phosphate provided by the present disclosure, the nano-scale lithium iron phosphate can be directly obtained, and there is no need to pulverize the product. This avoids the problem of high energy consumption caused by stirring and ball milling in the conventional preparation process of a lithium iron phosphate positive electrode material, and reduces procedures, such as drying and pulverization for the iron phosphate, and mixing and sand grinding for preparation of the lithium iron phosphate, thereby greatly reducing the manufacturing cost of the material.
4. The preparation method for the lithium iron phosphate provided by the present disclosure has the advantages of simple synthesis process and low cost, and can obtain the lithium iron phosphate with excellent capacity per gram and rate capability.

### Brief Description of the Drawings

The accompanying drawings, which constitute a part of this disclosure, are used to provide a further understanding of the present disclosure, and the exemplary embodiments of the present disclosure and the description thereof are used to explain the present disclosure and do not constitute improper limitations to the present disclosure. In the accompanying drawings:
Fig. 1 is an SEM image of a lithium iron phosphate material prepared in Embodiment 1 according to the present disclosure;
Fig. 2 is an SEM image of a lithium iron phosphate material prepared in Comparative Embodiment 1; and
Fig. 3 shows charging and discharging curves of button batteries prepared from lithium iron phosphate materials of Embodiment 1 and Comparative Embodiment 1 according to the present disclosure.

### Detailed Description of the Embodiments

For a clearer understanding of the technical features, objectives and beneficial effects of the present disclosure, the technical solution of the present disclosure will be described in detail below, but it is not to be construed as limiting the implementable scope of the present disclosure.

### Embodiment 1

This embodiment provides a preparation method for a lithium iron phosphate, the preparation method includes:
1. Nano lithium carbonate having a particle size of 400 nm was vacuum-dried and added to an emulsifier solution formed by sodium lauryl sulfate and polyoxyethylene alkyl phenol ether, the mixture was stirred constantly. Then, butyl acrylate and divinylbenzene (both as a first initiator) were added, and a first polymerization reaction was initiated by free radicals, the first polymerization reaction was carried out at a temperature of 70 °C for 4 h to obtain an intermediate product A.

A mole ratio of the emulsifier to the lithium carbonate was 0.5:1, a mass ratio of the sodium lauryl sulfate to the polyoxyethylene alkyl phenol ether was 1.5:1, a mole percentage of the divinylbenzene in the first initiator was 5%, a mole ratio of the first initiator to the lithium carbonate was 0.5:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 85 °C for 4 h. The resulting emulsion system was cooled to 25 °C, demulsified with ethanol, washed with water and filtered, the solid was dried at 80°C to obtain macromolecule-coated lithium carbonate nanoparticles, i.e., an intermediate product B.

A mole ratio of the methyl methacrylate to the lithium carbonate was 0.05:1. A mole ratio of the methyl methacrylate to the divinylbenzene to the hydrogen peroxide was 1:0.5:1.

3. A ferric chloride solution was added to the intermediate product B, followed by the addition of hydrogen peroxide (an oxidant) with a mass concentration of 20%, the mixture was quickly stirred to obtain a first suspension. A mole ratio of iron in the ferric chloride to lithium in the lithium carbonate was 1:1.25, a mole ratio of the hydrogen peroxide to the iron of the ferric chloride was 0.5:1.

4. A phosphoric acid solution was added to the first suspension and stirred evenly to form a reaction system, then, ammonia water was added slowly and dropwise to adjust a pH of the reaction system to 2.3, a dropwise addition speed of the ammonia water was controlled at V=10t²+5 (V is the dropwise addition speed in mL/min, and t is the cumulative addition time in min). A reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. A mole ratio of phosphorus in the phosphoric acid solution to the iron in the ferric chloride was 1:1.

5. The intermediate product C was dispersed in a glucose solution, and spray-drying was carried out to obtain a nano-scale lithium iron carbonate precursor, glucose in the glucose solution accounted for 50% by mass of the lithium carbonate.

6. In a high-purity nitrogen atmosphere, the nano-scale lithium iron phosphate precursor was calcined at 750 °C for 10 h to obtain the lithium iron phosphate material.

### Embodiment 2

This embodiment provides a preparation method for a lithium iron phosphate, the preparation method includes:
1. Nano lithium carbonate having a particle size of 400 nm was vacuum-dried and added to an emulsifier solution formed by sodium lauryl sulfate and polyoxyethylene alkyl phenol ether, the mixture was stirred constantly. Then, butyl acrylate and divinylbenzene (both as a first initiator) were added, and a first polymerization reaction was initiated by free radicals, the first polymerization reaction was carried out at a temperature of 70 °C for 4 h to obtain an intermediate product A.

A mole ratio of the emulsifier to the lithium carbonate was 0.5:1, a mass ratio of the sodium lauryl sulfate to the polyoxyethylene alkyl phenol ether was 1.5:1, a mole percentage of the divinylbenzene in the first initiator was 5%, a mole ratio of the first initiator to the lithium carbonate was 0.6:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 85 °C for 4 h. The resulting emulsion system was cooled to 25 °C, demulsified with an aqueous solution of NaCl, and washed with water until no Cl⁻ could be detected in the product by using an AgNOs solution, filtration was carried out, and the solid was dried at 80 °C to obtain macromolecule-coated lithium carbonate nanoparticles, i.e., an intermediate product B.

A mole ratio of the methyl methacrylate to the lithium carbonate was 0.05:1, a mole ratio of the methyl methacrylate to the divinylbenzene to the hydrogen peroxide was 1.1:0.5:1.

3. A ferric chloride solution was added to the intermediate product B, followed by the addition of hydrogen peroxide (an oxidant) with a mass concentration of 20%, the mixture was quickly stirred to obtain a first suspension. A mole ratio of iron in the ferric chloride to lithium in the lithium carbonate was 1:1.25, a mole ratio of the hydrogen peroxide to the iron of the ferric chloride was 0.5:1.

4. A phosphoric acid solution was added to the first suspension and stirred evenly to form a reaction system, then, ammonia water was added slowly and dropwise to adjust a pH of the reaction system to 2.3, a dropwise addition speed of the ammonia water was controlled at V=10t²+5 (V is the dropwise addition speed in mL/min, and t is the cumulative addition time in min). A reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. A mole ratio of phosphorus in the phosphoric acid solution to the iron in the ferric chloride was 1:1.

5. The intermediate product C was dispersed in a glucose solution, and spray-drying was carried out to obtain a nano-scale lithium iron carbonate precursor, glucose in the glucose solution accounted for 50% by mass of the lithium carbonate.

6. In a nitrogen atmosphere, the nano-scale lithium iron phosphate precursor was calcined at 800 °C for 10 h to obtain the lithium iron phosphate material.

### Embodiment 3

This embodiment provides a preparation method for a lithium iron phosphate, the preparation method includes:
1. Nano lithium carbonate having a particle size of 300 nm was vacuum-dried and added to an emulsifier solution formed by sodium lauryl sulfate and polyoxyethylene alkyl phenol ether, the mixture was stirred constantly, then, butyl acrylate and divinylbenzene (both as a first initiator) were added, and a first polymerization reaction was initiated by free radicals, the first polymerization reaction was carried out at a temperature of 60 °C for 2 h to obtain an intermediate product A.

Wherein, a mole ratio of the emulsifier to the lithium carbonate was 0.5:1, a mass ratio of the sodium lauryl sulfate to the polyoxyethylene alkyl phenol ether was 1:1, a mole percentage of the divinylbenzene in the first initiator was 5%, a mole ratio of the first initiator to the lithium carbonate was 0.6:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 75 °C for 4 h. The resulting emulsion system was cooled to 25 °C, demulsified with an aqueous solution of NaCl, and washed with water until no Cl⁻ could be detected in the product by using an AgNOs solution, filtration was carried out, and the solid was dried at 70 °C to obtain macromolecule-coated lithium carbonate nanoparticles, i.e., an intermediate product B.

Wherein, a mole ratio of the methyl methacrylate to the lithium carbonate was 0.05:1, a mole ratio of the methyl methacrylate to the divinylbenzene to the hydrogen peroxide was 2:0.5:1.5.

3. A ferric chloride solution was added to the intermediate product B, followed by the addition of hydrogen peroxide (an oxidant) with a mass concentration of 20%, the mixture was quickly stirred to obtain a first suspension. Wherein, a mole ratio of iron in the ferric chloride to lithium in the lithium carbonate was 1:0.95, a mole ratio of the hydrogen peroxide to the iron in the ferric chlorate was 0.2:1.

4. A phosphoric acid solution was added to the first suspension and stirred evenly to form a reaction system, then, ammonia water was added slowly and dropwise to adjust a pH of the reaction system to 2.1, a dropwise addition speed of the ammonia water was controlled at V=10t²+5 (V is the dropwise addition speed in mL/min, and t is the cumulative addition time in min), a reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. A mole ratio of phosphorus in the phosphoric acid solution to the iron in the ferric chlorate was 1:1.

5. The intermediate product C was dispersed in a glucose solution, and spray-drying was carried out to obtain a nano-scale lithium iron carbonate precursor, glucose in the glucose solution accounted for 40% by mass of the lithium carbonate.

6. In a nitrogen atmosphere, the nano-scale lithium iron phosphate precursor in step 5 was calcined at 700 °C for 10 h to obtain the lithium iron phosphate material.

### Embodiment 4

This embodiment provides a preparation method for a lithium iron phosphate, the preparation method includes:
1. Nano lithium carbonate having a particle size of 350 nm was vacuum-dried and added to an emulsifier solution formed by sodium lauryl sulfate and polyoxyethylene alkyl phenol ether, the mixture was stirred constantly, then, butyl acrylate and divinylbenzene (both as a first initiator) were added, and a first polymerization reaction was initiated by free radicals, the first polymerization reaction was carried out at a temperature of 65 °C for 3 h to obtain an intermediate product A.

Wherein, a mole ratio of the emulsifier to the lithium carbonate was 0.5:1, a mass ratio of the sodium lauryl sulfate to the polyoxyethylene alkyl phenol ether was 1.25:1, a mole percentage of the divinylbenzene in the first initiator was 5%, a mole ratio of the first initiator to the lithium carbonate was 0.7:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 80 °C for 4 h. The resulting emulsion system was cooled to 25 °C, demulsified with an aqueous solution of KCl, and washed with water until no Cl⁻ could be detected in the product by using an AgNOs solution, filtration was carried out, and the solid was dried at 75 °C to obtain macromolecule-coated lithium carbonate nanoparticles, i.e., an intermediate product B.

Wherein, a mole ratio of the methyl methacrylate to the lithium carbonate was 0.05:1, a mole ratio of the methyl methacrylate to the divinylbenzene to the hydrogen peroxide was 1.5:0.5:3.

3. A ferric chloride solution was added to the intermediate product B, followed by the addition of hydrogen peroxide (an oxidant) with a mass concentration of 20%, the mixture was quickly stirred to obtain a first suspension. Wherein, a mole ratio of iron in the ferric chloride to lithium in the lithium carbonate was 1:1, a mole ratio of the hydrogen peroxide to the iron in the ferric chlorate was 0.35:1.

4. A phosphoric acid solution was added to the first suspension and stirred evenly to form a reaction system, then, ammonia water was added slowly and dropwise to adjust a pH of the reaction system to 2.2, a dropwise addition speed of the ammonia water was controlled at V=10t²+5 (V is the dropwise addition speed in mL/min, and t is the cumulative addition time in min), a reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. Wherein, a mole ratio of phosphorus in the phosphoric acid solution to the iron in the ferric chlorate was 1:1.

5. The intermediate product C was dispersed in a glucose solution, and spray-drying was carried out to obtain a nano-scale lithium iron carbonate precursor, glucose in the glucose solution accounted for 45% by mass of the lithium carbonate.

6. In a nitrogen atmosphere, the nano-scale lithium iron phosphate precursor in step 5 was calcined at 750 °C for 10 h to obtain the lithium iron phosphate material.

### Embodiment 5

This embodiment provides a preparation method for a lithium iron phosphate, the preparation method includes:
1. Nano lithium carbonate having a particle size of 300 nm was vacuum-dried and added to an emulsifier solution formed by sodium lauryl sulfate and polyoxyethylene alkyl phenol ether, the mixture was stirred constantly, then, butyl acrylate and divinylbenzene (both as a first initiator) were added, and a first polymerization reaction was initiated by free radicals, the first polymerization reaction was carried out at a temperature of 70 °C for 4 h to obtain an intermediate product A.

Wherein, a mole ratio of the emulsifier to the lithium carbonate was 0.5:1, a mass ratio of the sodium lauryl sulfate to the polyoxyethylene alkyl phenol ether was 1:1, a mole percentage of the divinylbenzene in the first initiator was 5%, a mole ratio of the first initiator to the lithium carbonate was 0.8:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 85 °C for 4 h, the resulting emulsion system was cooled to 25 °C, demulsified with an aqueous solution of KCl, and washed with water until no Cl⁻ could be detected in the product by using an AgNOs solution, filtration was carried out, and the solid was dried at 80 °C to obtain macromolecule-coated lithium carbonate nanoparticles, i.e., an intermediate product B.

Wherein, a mole ratio of the methyl methacrylate to the lithium carbonate was 0.05:1, a mole ratio of the methyl methacrylate to the divinylbenzene to the hydrogen peroxide was 2:0.5:1.

3. A ferric chloride solution was added to the intermediate product B, followed by the addition of hydrogen peroxide (an oxidant) with a mass concentration of 20%, the mixture was quickly stirred to obtain a first suspension. Wherein, a mole ratio of iron in the ferric chloride to lithium in the lithium carbonate was 1:1.25, a mole ratio of the hydrogen peroxide to the iron in the ferric chlorate was 0.2:1.

4. A phosphoric acid solution was added to the first suspension and stirred evenly to form a reaction system, then, ammonia water was added slowly and dropwise to adjust a pH of the reaction system to 2.1, a dropwise addition speed of the ammonia water was controlled at V=10t²+5 (V is the dropwise addition speed in mL/min, and t is the cumulative addition time in min), a reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. A mole ratio of phosphorus in the phosphoric acid solution to the iron in the ferric chlorate was 1:1.

5. The intermediate product C was dispersed in a glucose solution, and spray-drying was carried out to obtain a nano-scale lithium iron carbonate precursor, wherein, glucose in the glucose solution accounted for 40% by mass of the lithium carbonate.

6. In a nitrogen atmosphere, the nano-scale lithium iron phosphate precursor in step 5 was calcined at 750 °C for 10 h to obtain the lithium iron phosphate material.

### Embodiment 6

This embodiment provides a preparation method for a lithium iron phosphate, the preparation method includes:
1. Nano lithium carbonate having a particle size of 400 nm was vacuum-dried and added to an emulsifier solution formed by sodium lauryl sulfate and polyoxyethylene alkyl phenol ether, the mixture was stirred constantly, then, butyl acrylate and divinylbenzene (both as a first initiator) were added, and a first polymerization reaction was initiated by free radicals, the first polymerization reaction was carried out at a temperature of 70 °C for 4 h to obtain an intermediate product A.

Wherein, a mole ratio of the emulsifier to the lithium carbonate was 0.5:1, a mass ratio of the sodium lauryl sulfate to the polyoxyethylene alkyl phenol ether was 1.5:1, a mole percentage of the divinylbenzene in the first initiator was 5%, a mole ratio of the first initiator to the lithium carbonate was 1:1.

2. A mixed solution of methyl methacrylate, divinylbenzene (as a crosslinking agent) and hydrogen peroxide (a second initiator) was prepared, the mixed solution was added dropwise to the intermediate product A, and a second polymerization reaction was carried out at 85 °C for 4 h. The resulting emulsion system was cooled to 25 °C, demulsified with an aqueous solution of KCl, and washed with water until no Cl⁻ could be detected in the product by using an AgNOs solution, filtration was carried out, and the solid was dried at 80 °C to obtain macromolecule-coated lithium carbonate nanoparticles, i.e., an intermediate product B.

Wherein, a mole ratio of the methyl methacrylate to the lithium carbonate was 0.05:1, a mole ratio of the methyl methacrylate to the divinylbenzene to the hydrogen peroxide was 2:0.5:3.

3. A ferric chloride solution was added to the intermediate product B, followed by the addition of hydrogen peroxide (an oxidant) with a mass concentration of 20%, the mixture was quickly stirred to obtain a first suspension. Wherein, a mole ratio of iron in the ferric chloride to lithium in the lithium carbonate was 1:1.25, a mole ratio of the hydrogen peroxide to the iron in the ferric chloride was 0.5:1.

4. A phosphoric acid solution was added to the first suspension and stirred evenly to form a reaction system, then, ammonia water was added slowly and dropwise to adjust a pH of the reaction system to 2.2, a dropwise addition speed of the ammonia water was controlled at V=10t²+5 (V is the dropwise addition speed in mL/min, and t is the cumulative addition time in min), a reaction was carried out at 80 °C for 4 h to obtain a second suspension. The second suspension was filtered, and the solid was washed with water several times until no Cl⁻ could be detected in the product by using an AgNOs solution, thereby obtaining an intermediate product C. A mole ratio of phosphorus in the phosphoric acid solution to the iron in the ferric chlorate was 1:1.

5. The intermediate product C was dispersed in a glucose solution, and spray-drying was carried out to obtain a nano-scale lithium iron carbonate precursor, glucose in the glucose solution accounted for 45% by mass of the lithium carbonate.

6. In a nitrogen atmosphere, the nano-scale lithium iron phosphate precursor in step 5 was calcined at 750 °C for 10 h to obtain the lithium iron phosphate material.

### Comparative Embodiment 1

Lithium carbonate and iron phosphate were weighed according to a lithium: iron: phosphorus mole ratio of 1:1:1, added to deionized water, and stirred evenly, followed by the addition of sucrose, the mass of the sucrose accounted for 7% of the theoretical mass of the product lithium iron phosphate, ball milling was carried out for 1 h to obtain a precursor slurry.

2. The precursor slurry was sand-ground until D50=400 nm and D100≤4 µm. Spray-drying was carried out to obtain a precursor material, the precursor material was calcined at 750 °C in a high-purity nitrogen atmosphere for 10 h to obtain the lithium iron phosphate material.

### Test Embodiment 1

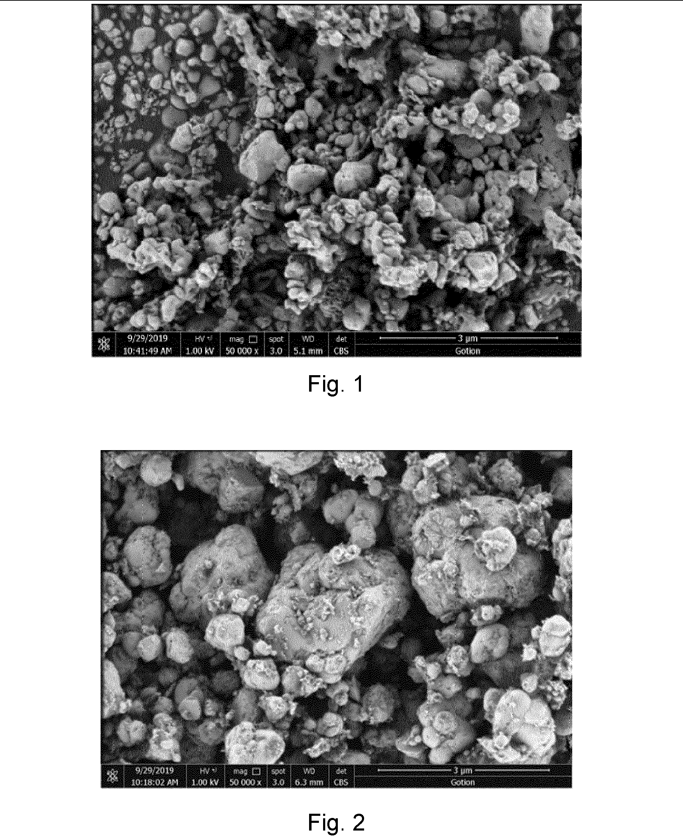

Fig. 1 and Fig. 2 are respectively SEM images of the lithium iron phosphate materials prepared in Embodiment 1 and Comparative Embodiment 1, as can be seen from Fig. 1, the lithium iron phosphate material prepared in Embodiment 1 has small and even particles. As can be seen from Fig. 2, the lithium iron phosphate material prepared in Comparative Embodiment 1 has uneven particle sizes and uneven particle size distribution.

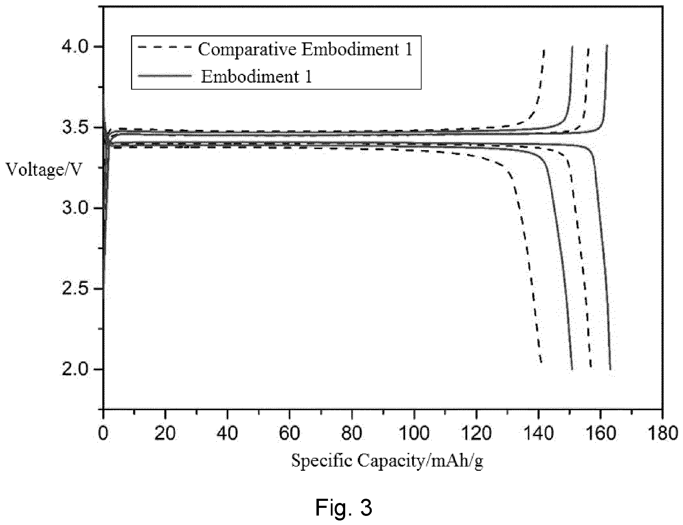

Batteries used in the embodiments and test embodiment of the present disclosure are dummy batteries assembled by using the materials prepared in the present disclosure as positive electrode materials and battery-grade lithium sheets as negative electrode materials by using an electrolyte mainly including lithium hexafluorophosphate, and the electrochemical window of charging/discharging is 2.0 to 4.0 V. Fig. 3 shows charging and discharging curves of button batteries prepared from lithium iron phosphate materials of Embodiment 1 and Comparative Embodiment 1, as can be seen from Fig. 3, the lithium iron phosphate prepared in Embodiment 1 has higher capacity per gram and rate capability than that prepared in Comparative Embodiment 1.

The foregoing descriptions are merely preferred embodiments of the present disclosure and are not intended to limit the present disclosure, for those skilled in the art, the present disclosure may have various changes and variations. Any modification, equivalent replacement, or improvement made within the spirit and principle of the present disclosure shall fall within the protection scope of the present disclosure.

## Claims

1. A preparation method for a lithium iron phosphate, comprising:
S1: dispersing a lithium source by using an emulsifier, adding a first initiator, and carrying out a first polymerization reaction to obtain an intermediate product A; wherein the first initiator comprises butyl acrylate and divinylbenzene, and the first polymerization reaction is a radical initiated polymerization reaction;
S2: adding a mixed solution of methyl methacrylate, a crosslinking agent and a second initiator to the intermediate product A, and carrying out a second polymerization reaction to obtain an intermediate product B;
S3: mixing the intermediate product B, an iron source and an oxidant to obtain a suspension, adding a phosphorus source to the suspension, and carrying out a third reaction to obtain an intermediate product C;
wherein a pH of the reaction system of the third reaction is kept at 2.1 to 2.3 by adding ammonia water; and an addition speed of the ammonia water is V=10t²+5, wherein the V is the addition speed of the ammonia water in mL/min, and t is the cumulative addition time of the ammonia water in min; and
S4: dispersing the intermediate product C by using a glucose solution, carrying out drying, and carrying out calcining at 700 °C to 800 °C in a protective gas for 6 h to 10 h to obtain the lithium iron phosphate.

2. The preparation method according to claim 1, wherein in the S1, the lithium source comprises one or a combination of two or more of lithium carbonate, lithium hydroxide, lithium chloride, lithium fluoride, lithium acetate and lithium nitrate; and/or
in the S1, the lithium source has a particle size D50 of 300 nm to 400 nm.

3. The preparation method according to claim 1, wherein in the S1, the emulsifier comprises an anionic surfactant and a nonionic surfactant; and a mass ratio of the anionic surfactant to the nonionic surfactant is (1-1.5):1.

4. The preparation method according to claim 3, wherein the anionic surfactant comprises sodium lauryl sulfate; and/or
the nonionic surfactant comprises polyoxyethylene alkyl phenol ether.

5. The preparation method according to claim 1, wherein the first initiator comprises the divinylbenzene and the butyl acrylate in a mole ratio of (5-10): (90-95).

6. The preparation method according to claim 1 or 2, wherein in the S1, a mole ratio of the emulsifier to the lithium source is (0.5-1):1; and a mole ratio of the first initiator to the lithium source is (0.5-1):1.

7. The preparation method according to any one of claims 1 to 6, wherein in the S1, the first polymerization reaction is carried out at a temperature of 60 °C to 70 °C for 2 h to 4 h.

8. The preparation method according to claim 1, wherein in the S2, a mole ratio of the methyl methacrylate to the lithium source is (0.05-0.5):1; and a mole ratio of the methyl methacrylate to the crosslinking agent to the second initiator is (1-2):0.5:(1-3).

9. The preparation method according to claim 1 or 8, wherein in the S2, the crosslinking agent comprises divinylbenzene; and the second initiator comprises one or a combination of two or more of ammonium persulfate, potassium persulfate and hydrogen peroxide.

10. The preparation method according to claim 1, 8 or 9, wherein in the S2, the second polymerization reaction is carried out at a temperature of 75-85 °C for 4 h to 8 h.

11. The preparation method according to claim 1, wherein in the S3, the iron source comprises ferric iron salt; the ferric iron salt comprises one or a combination of two or more of ferric chloride, ferric sulfate and ferric nitrate;
the oxidant comprises hydrogen peroxide; and
the phosphorus source comprises one or a combination of two or more of phosphoric acid, ammonium dihydrogen phosphate and ammonium phosphate.

12. The preparation method according to claim 1 or 11, wherein in the S3, a mole ratio of iron in the iron source to lithium in the lithium source is 1:(0.95-1.25);
a mole ratio of the iron in the iron source to the oxidant is 1:(0.2-0.5); and
a mole ratio of phosphorus in the phosphorus source to the iron in the iron source is 1:(0.95-1).

13. The preparation method according to any one of claims 1, 11 or 12, wherein in the S3, the third reaction is carried out at a temperature of 70 °C to 80 °C for 4 h to 8 h.

14. The preparation method according to claim 1, wherein in the S4, glucose in the glucose solution accounts for 40% to 50% by mass of the lithium source.

15. A lithium iron phosphate, obtained by the preparation method according to any one of claims 1 to 14.

16. A positive electrode material, comprising the lithium iron phosphate according to claim 15.
